# EUROPÄISCHE PATENTSCHRIFT

(11) **EP 2 924 463 B1**
(45) Veröffentlichungstag und Bekanntmachung des Hinweises auf die Patenterteilung: **15.08.2018**
(21) Anmeldenummer: 15160463.4
(22) Anmeldetag: 24.03.2015
(51) Int. Cl.: G01S 17/46, G01S 17/10, G01S 7/487, G01S 7/497, G01S 7/48

(54) **SENSORSYSTEM ZUR ERKENNUNG DER EIGENSCHAFTEN EINER ÜBERTRAGUNGSSTRECKE**
SENSOR SYSTEM FOR DETECTION OF CHARACTERISTICS OF A TRANSMISSION LINK
SYSTÈME DE CAPTEUR DESTINÉ À LA RECONNAISSANCE DE PROPRIÉTÉS D'UNE VOIE DE TRANSMISSION

(30) Priorität: 25.03.2014 EP 14161559
(43) Veröffentlichungstag der Anmeldung: 30.09.2015
(73) Patentinhaber: Elmos Semiconductor Aktiengesellschaft, 44227 Dortmund (DE)
(72) Erfinder: Melcher, Rolf, 76669 Bad Schönborn (DE); Münzer, Roland, 75179 Pforzheim (DE)
(74) Vertreter: Durm Patentanwälte PartG mbB

(56) Entgegenhaltungen:
- EP-A1- 2 653 885
- EP-A2- 2 290 393
- WO-A1-2008/092611
- DE-A1-102012 206 089
- RANA MAHDI ET AL: "Lateral Drift-Field Photodetector for high speed 0.35Â[mu]m CMOS imaging sensors based on non-uniform lateral doping profile: Design, theoretical concepts, and TCAD simulations", PH.D. RESEARCH IN MICROELECTRONICS AND ELECTRONICS (PRIME), 2010 CONFERENCE ON, IEEE, PISCATAWAY, NJ, USA, 18. Juli 2010 (2010-07-18), Seiten 1-4, XP031764425, ISBN: 978-1-4244-7905-4

## Beschreibung

Sensorsystem zur Erkennung der Eigenschaften einer Übertragungsstrecke

Die vorliegende Erfindung betrifft ein Sensorsystem zur Ermittlung der Eigenschaften einer Übertragungsstrecke zwischen einem Sender und einem Empfänger oder zur Ermittlung der Eigenschaften eines Objekts in der Übertragungsstrecke. Das Sensorsystem basiert auf einer rückkoppelnden Regelung. Es umfasst den Sender, der mit einem Sendespeisesignal angesteuert wird und ein Sendesignal in die Übertragungsstrecke sendet, und eine Kompensationseinheit, die mit einem Kompensationsspeisesignal gespeist wird und ein Kompensationssignal erzeugt. Der Empfänger des Sensorsystems empfängt auch das vom Sender ausgesandte Sendesignal nach Durchgang durch wenigstens einen Teil der Übertragungsstrecke und optional nach zusätzlicher Beeinflussung durch ein Objekt in der Übertragungsstrecke und gibt ein Empfängerausgangssignal aus. In einer Signalerzeugungseinheit des Sensorsystems wird das Sendespeisesignal oder das Kompensationsspeisesignal erzeugt. Eine Verarbeitungseinheit des Sensorsystems verarbeitet das Empfängerausgangssignal des Empfängers weiter und erzeugt ein Regelwertsignal.

Eine Rücktransformationseinheit des Sensorsystems führt mit dem Regelwertsignal oder einem weiterverarbeiteten Regelwertsignal eine Rücktransformation durch, so dass eine Regelschleife gebildet wird und das von der Rücktransformationseinheit erzeugte Signal dem Sender oder dem Kompensationssender zugeführt wird.
Aus dem Stand der Technik sind eine ganze Reihe verschiedener Verfahren zum Erkennen eines Objekts in einer optischen Übertragungsstrecke oder zur Ermittlung dessen Eigenschaften bekannt. Beispielsweise beschreibt die DE102012206089A1 Bildsensoren, die als Halbleiterstruktur mit photoempfindlicher Zone und Transfergate sowie einem Gebiet zur Zwischenspeicherung photogenerierter Ladungen in einem Potentialtopf ausgebildet sind. Diese Sensoren können u.a. auch Überwachungssystemen eingesetzt werden. Einige der bekannten Verfahren beruhen auch auf einer kompensierenden Regelung.
Zu nennen sind hier beispielhaft:
DE102012024597.1
DE102013013664.4.
WO2013124018
DE10001955A1
DE10024156A1
DE19839730C1
DE9309837U1
DE10001943C1
DE10346741B3
DE102004025345B3
DE102005013352A1
DE102005010745B3
DE102007005187B4 oder
WO2008092611 A1 (die zur Abgrenzung nach der zweiteiligen Form verwendet wird)
Den hier genannten Verfahren ist gemeinsam, dass sie im Eingangszweig hinter dem Empfänger typischerweise eine analoge Multiplikationseinheit erfordern, deren Arbeitsfrequenz durch eine relativ niedrige untere Grenzfrequenz bestimmt ist. Zudem sind die Systeme nicht nur relativ langsam in der Messung sondern insbesondere in Folge des 1/f Rauschens zum Teil störanfällig.

Aufgabe der vorliegenden Erfindung ist es, ein Sensorsystem vorzuschlagen, das im Vergleich zu den bekannten Systemen deutlich schneller reagiert und Messungen mit einer größeren Geschwindigkeit durchführen kann.

Gelöst wird die vorliegende Aufgabe durch ein System mit den Merkmalen des Anspruchs 1. Besondere Bevorzugungen sind in den Unteransprüchen definiert.

Das erfindungsgemäße Sensorsystem zur Ermittlung der Eigenschaften einer Übertragungsstrecke zwischen einem Sender und einem Empfänger oder zur Ermittlung der Eigenschaften eines Objektes in einer Übertragungsstrecke basiert auf einer rückkoppelnden Regelung und einem Regelkreis. Das System umfasst den Sender, der mit einem Sendespeisesignal angesteuert wird und ein Sendesignal in die Übertragungsstrecke sendet, das von dem Empfänger empfangen wird. Das ausgesendete Sendesignal durchläuft wenigstens einen Teil der Übertragungsstrecke und wird gegebenenfalls durch das optional in der Übertragungsstrecke vorhandene Objekt oder durch mehrere in der Übertragungsstrecke vorhandene Objekte beeinflusst. Der Empfänger gibt daraufhin ein Empfängerausgangssignal aus, das in einer Verarbeitungseinheit weiterverarbeitet wird. Die Weiterverarbeitungseinheit erzeugt ein Regelwertsignal. Selbstverständlich können in dem Sensorsystem mehrere Sender und Empfänger vorhanden sein.

Eine Kompensationseinheit des Sensorsystems wird mit einem Kompensationsspeisesignal gespeist und erzeugt ein Kompensationssignal. Dieses Kompensationssignal wird dem Empfängerausgangssignal des Empfängers überlagert. Das Sendespeisesignal oder das Kompensationsspeisesignal werden von einer Signalerzeugungseinheit erzeugt, die bevorzugt ein Generator ist. Eine Rücktransformationseinheit verarbeitet das Regelwertsignal oder ein darauf basierendes Signal insofern weiter, dass eine Rücktransformation durchgeführt wird. Wenn die Signalerzeugungseinheit das Kompensationsspeisesignal erzeugt, ist die Rücktransformation eine Senderücktransformation, wobei in der Rücktransformationseinheit das Sendespeisesignal erzeugt wird.

Wird in der Signalerzeugungseinheit das Sendespeisesignal erzeugt, wird die Rücktransformation als eine Kompensationsrücktransformation ausgeführt und das Kompensationsspeisesignal erzeugt, das dem Kompensationssender zugeführt wird. Mischformen sind denkbar, bei denen beide Speisesignale oder jeweils Teile von ihnen in der Rücktransformationseinheit erzeugt werden.

Die Überlagerung des Kompensationssignals mit dem Empfängerausgangssignal kann auf unterschiedliche Arten und Weisen erfolgen. Dabei kommt es darauf an, dass dem Empfängerausgangssignal das Kompensationssignal überlagert ist, bevor es im Signalverarbeitungsablauf in einer weiteren Komponente des Sensorsystems weiterverarbeitet wird. Das Kompensationssignal kann beispielsweise am Ausgang des Empfängers zu dem Empfängerausgangssignal hinzuaddiert werden. Alternativ kann das Kompensationssignal dem Empfänger direkt zugeführt werden und in dem Empfänger dem zu verarbeitenden Signal (Sendesignal des Senders) überlagert werden. Auch so entsteht ein Signal bei dem Empfängerausgangssignal und Kompensationssignal überlagert sind.

In einer bevorzugten Ausführungsform umfasst die Kompensationseinheit des Sensorsystems einen Kompensationssender. Das Kompensationsspeisesignal wird bevorzugt dem Kompensationssender zugeführt, der das Kompensationssignal an den Empfänger sendet, so dass sich das Sendesignal des Senders und das Kompensationssignal am Eingang des Empfängers überlagern, bevorzugt summierend oder multiplizierend. Das überlagerte Eingangssignal wird in dem Empfänger verarbeitet, so dass das Empfängerausgangssignal mit dem Kompensationssignal überlagert ist.

Das von dem Sensorsystem erzeugte Regelwertsignal ist ein Maß für eine Eigenschaft der Übertragungsstrecke und/oder eine Eigenschaft des Objekts in der Übertragungsstrecke. Das Signal kann bei Vorhandensein von mehreren Objekten auch Informationen über mehrere Objekte enthalten und somit ein Maß für die Eigenschaft mehrerer Objekte sein.

Erfindungsgemäß ist der Empfänger eine Drift-Field-Diode, in der ein Element der Verarbeitungseinheit integriert ist. Die Drift-Field-Diode weist einen durch ein Dotierungsprofil erzeugten Dotierungsgradienten auf, so dass eine Raumladungszone entsteht, die durch ein elektrostatisches Feld modelliert werden kann.

Durch die Verwendung einer Drift-Field-Diode in einem derartigen Sensorsystem und Regelkreis kann eine Messung mit sehr hohen Frequenzen erfolgen. Bevorzugt liegen die Frequenzen für die Messung im höheren 100 MHz-Bereich, bevorzugt oberhalb von 500 MHz. Besonders bevorzugt können auch Messungen im GHz-Bereich durchgeführt werden. Es sind Drift-Field-Dioden vorstellbar, die mit einem oder mehreren GHz arbeiten, bevorzugt oberhalb 10 GHz. Eine Grenze nach oben ist nicht ersichtlich. Die Grenzen nach oben und unten werden in der Realität lediglich durch die Entwicklung von Drift-Field-Dioden beschränkt.

Die Messung mit hohen Frequenzen, bevorzugt im GHz-Bereich führt dazu, dass weniger Störer auftreten, die die Messung stören könnten. Das sogenannte 1/f-Rauschen nimmt ab. Für diese Art von Messungen sind Photodioden nicht geeignet, da sie viel zu träge und langsam arbeiten. Der Photostrom ist zu träge, um Messungen im höheren MHz-Bereich oder im GHz-Bereich durchzuführen.

Die Drift-Field-Diode hat den Vorteil, dass hier innerhalb der Diode direkt eine Demodulation zu niederfrequenten Signalen erfolgt, also zu Signalen im unteren MHz-Bereich oder im kHz-Bereich.

Durch die Modulation der Raumladungszone der Drift-Field-Diode wird die Empfindlichkeit der Drift-Field-Diode gesteuert.

Die Modulation der Raumladungszone der Drift-Field-Diode erfolgt mittels des Sendespeisesignals oder des Kompensationsspeisesignals. Bevorzugt ist somit also die Sensitivität der Drift-Field-Diode von dem Sendespeisesignal abhängig. Bevorzugt ist die Abhängigkeit der Sensitivität von dem Sendespeisesignal linear.

Das in die Drift-Field-Diode integrierte Element der Verarbeitungseinheit ist eine Linearform. Eine Linearform ist dem Fachmann bekannt und wird z. B. in den EP-Anmeldungen EP2924466A1, EP 2924459A1 und EP2924460A1 ausführlich beschrieben. Hier werden auch weitere Elemente beschrieben, die in der Drift-Field-Diode integriert sein können, beispielsweise auch ein Addierglied.

Die integrierte Linearform ist eine Multiplikation. Bei einer Multiplikation kann also das Produkt aus dem Sendespeisesignal und einem internen Signal gebildet werden, bevor das Ausgangssignal der Drift-Field-Diode erzeugt wird. Damit kann praktisch eine Filterung bereits innerhalb der Drift-Field-Diode erfolgen, was einen wesentlichen Vorteil gegenüber dem Stand der Technik darstellt. Beispielsweise können auch Autokorrelationsfilter in die Drift-Field-Diode integriert sein, wie etwa in den drei genannten Anmeldungen beschrieben.

Mit einer Drift-Field-Diode oder einem Drift-Field-Demodulation-Pixel lässt sich das Empfangssignal im Pixel kumulieren und demodulieren. Die Demodulation kann dann bevorzugt mit Rechtecksignalen erfolgen. Mit einer Drift-Field-Diode ist es möglich, direkt in der Diode die Demodulation durchzuführen. Mit vier schnellen Abtastungen pro Periode kann beispielsweise bevorzugt die Amplitude und Phase des Empfangssignals bestimmt werden.

In einer bevorzugten Ausführungsform wird eine Drift-Field-Diode (DFD) in Form einer Lateral-Drift-Field-Diode verwendet. Sie bietet eine schnelle Auslesemöglichkeit, die durch laterale elektrische Felder ermöglicht wird. Die maximale theoretische Demodulationsfrequenz liegt hierbei im Gigahertzbereich. Somit bietet auch die Drift-Field-Diode den Vorteil, dass eine sehr schnelle und effiziente Verarbeitung durchgeführt werden kann. In einer bevorzugten Ausführungsform des Sensorsystems mit Drift-Field-Diode umfasst sie somit eine Multiplikationseinheit als Teil der Linearform der Verarbeitungseinheit, so dass das Empfangssignal direkt in der Drift-Field-Diode mit beispielsweise dem Sendespeisesignal oder einem speziellen Wavelet-Signal multipliziert werden kann.
In einer bevorzugten Ausführungsform ist die Frequenz des Sendesignals des Senders mindestens 100 MHz, bevorzugt mindestens 200 MHz, besonders bevorzugt sind höhere Frequenzen, beispielsweise mindestens 500 MHz, bevorzugt, 1 GHz und höher. Durch die Verwendung höherer Frequenzen für die Modulation kann die Sensitivität ebenfalls erhöht werden. Das System insgesamt wird störunanfälliger.
Die Signalerzeugungseinheit des Sensorsystems kann ein Signalgenerator sein. Bevorzugt ist die Signalerzeugungseinheit ein Wavelet-Generator, der ein Paar von Wavelets erzeugt, die zu dem Sendesignal weiterverarbeitet werden. Die Verwendung von Wavelet-Signalen in einem Sensorsystem und einer Regelschleife ist ausführlich in den europäischen Patentanmeldungen mit den Anmeldenummern: EP 14 161 553.4, EP 14 161 556.7, EP 14 161 559.1 beschrieben.

Bevorzugt besteht das Paar der vom Wavelet-Generator erzeugten Wavelets aus einer Sinusfunktion und einer dazu orthogonalen Cosinusfunktion. Dies hat sich insbesondere dann als vorteilhaft erwiesen, wenn eine Verarbeitung im Frequenzbereich erfolgen soll, die eine Fast-Fourier-Transformation und eine inverse Fast-Fourier-Transformation voraussetzt. Näheres ist in den oben genannten Anmeldungen beschrieben.

Das Senderspeisesignal kann bevorzugt durch eine gewichtete oder durch eine ungewichtete Summierung aus mehreren Wavelet-Signalen gebildet werden. Hierdurch lassen sich nahezu beliebige Signale (Funktionen) mit gewünschten Eigenschaften erzeugen.

In einer bevorzugten Ausführungsform weist das Sensorsystem einen Filter auf, der das Regelwertsignal zu einem Filterausgangssignal weiterverarbeitet und umwandelt. Das Filterausgangssignal wird weiterverarbeitet und bevorzugt den Kompensationssendern zugeführt oder im Falle einer Senderücktransformation dem Sender und zu dem Sendespeisesignal weiterverarbeitet.

Erfolgt in dem Sensorsystem eine Rückführung des Kompensationsspeisesignals sind drei mögliche Ausführungen denkbar:
Zum einen kann das Kompensationsspeisesignal mit einer ersten Kompensationsfilterfunktion verstärkt und gegebenenfalls gefiltert werden. Es wird als erstes Kompensatorsignal über einen Kompensationssender und eine dritte Übertragungsstrecke summierend oder multiplizierend überlagernd zum Empfänger gesendet. Der Empfänger empfängt also das vom Sender ausgesandte Sendesignal, das wenigstens teilweise durch die Übertragungsstrecke gesendet wird, sowie das von dem Kompensationssender ausgesandte Signal. Das Empfängerausgangssignal umfasst dann sowohl das empfangene Kompensatorsignal wie auch das Sendesignal. Diese Variante der Rückführung ist bevorzugt.

Alternativ kann das Kompensationsspeisesignal mit einer zweiten Kompensationsfilterfunktion verstärkt oder optional gefiltert werden und als zweites Kompensatorsignal summierend oder multiplizierend überlagernd direkt in den Empfänger hineingeleitet werden. Die in der Drift-Field-Diode integrierte Linearform sorgt dafür, dass das Kompensatorsignal innerhalb der Drift-Field-Diode summierend (bei einem Addierglied) oder multiplizierend (bei einem Multiplizierglied) überlagert wird. In dieser gleichwertigen Variante kann auf den Kompensationssender verzichtet werden. Die Kompensation erfolgt dennoch im Empfänger.

In einer dritten, ebenfalls gleichwertigen Variante kann das Kompensationsspeisesignal mit einer dritten Kompensationsfilterfunktion verstärkt und/oder optional gefiltert werden und als drittes Kompensatorsignal summierend einem Addierer zugeleitet werden. In dem Addierer wird das dritte Kompensatorsignal mit dem Empfängerausgangssignal überlagert, verarbeitet und der Verarbeitungseinheit zugeführt. Die Kompensation erfolgt in der Verarbeitungskette nach dem Empfänger. Auf den Kompensationssender kann ebenfalls verzichtet werden.

Bevorzugt kann das Speisesignal mit einem Offset beaufschlagt werden. Das Speisesignal kann entweder das Sendespeisesignal oder das Kompensatorspeisesignal sein, entweder vom Generator erzeugt oder rückgeführt. Bevorzugt erfolgt eine Addition des Offset-Signals eines Offset-Generators mit dem entsprechenden Speisesignal. Es können auch beide Speisesignale einen Offset haben.

Die Erfindung wird nachfolgend anhand von in den Figuren dargestellten besonderen Ausführungsformen näher erläutert. Die dort dargestellten Besonderheiten können einzeln oder in Kombination verwendet werden, um bevorzugte Ausgestaltungen der Erfindung zu schaffen. Die beschriebenen Ausführungen stellen keine Einschränkung der durch die Ansprüche in ihrer Allgemeinheit definierten Erfindung dar. Es zeigen:
- Figur 1: ein Sensorsystem mit einer Regelung eines Kompensationssenders;
- Figur 2: eine Ausführungsform des Sensorsystems mit Regelung des Senders und
- Figur 3: ein Prinzipschaltbild einer Drift-Field-Diode.

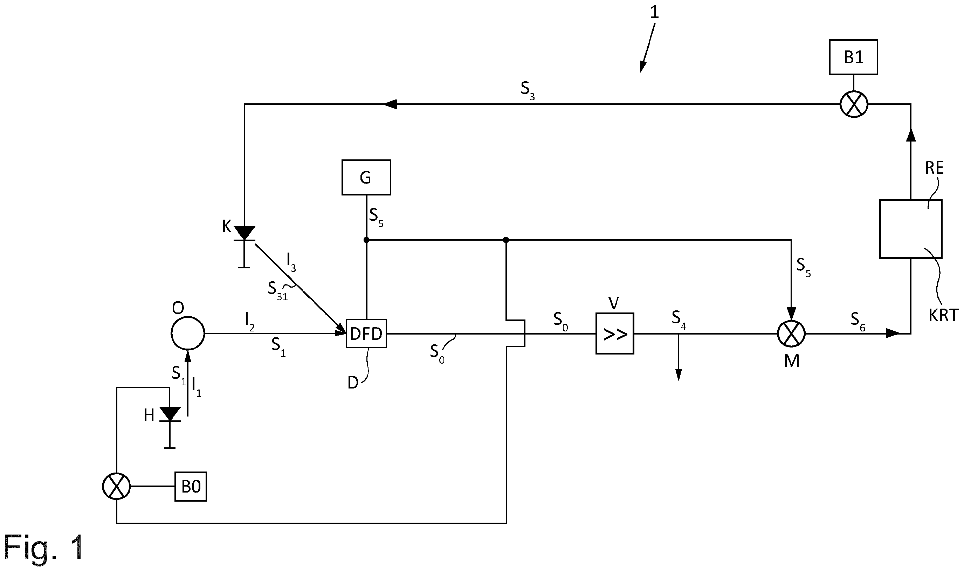

Fig. 1 zeigt schematisch ein erfindungsgemäßes Sensorsystem 1, das auf einer kompensierenden Regelung basiert. Die schematische Zeichnung enthält nur die wichtigsten Elemente, die einem Fachmann das grundlegende Verständnis der erfindungsgemäßen Vorrichtung erlauben sollen. Ein Sender H, hier in Form einer LED oder einer anderen Lichtquelle, wird mit einem Sendespeisesignal S5 von einem Generator G angesteuert. Das Sendespeisesignal S5 ist vorzugsweise bandbegrenzt mit einer oberen Frequenz fₘₐₓ, einer Mittelfrequenz f₀ und einer unteren Grenzfrequenz fₘᵢₙ. Bevorzugt ist fₘᵢₙ größer als (fₘₐₓ - fₘᵢₙ) / 2. Das Senderspeisesignal S5 kann mittels eines Offset-Signals, das aus einem Offset-Generator B0 erzeugt wird, überlagert sein. Dies ist insbesondere bei Lichtquellen als Sender notwendig, da kein "negatives Licht" erzeugt werden kann.

Das von dem Sender H ausgesandte Sendesignal S1 wird durch die Übertragungsstrecke I, hier dargestellt als erster Teil I1 und zweiter Teil I2, gesandt, wobei ein in der Übertragungsstrecke I angeordnetes Objekt O das Sendesignal S1 beeinflusst. Nach Durchgang durch die Übertragungsstrecke I wird das Sendesignal S1 an einen Empfänger D empfangen, der als Drift-Field-Diode DFD ausgeführt ist. Die Drift-Field-Diode DFD wird ebenfalls mittels des von dem Generator G erzeugten Senderspeisesignal S5 gespeist, das die durch den Dotierungsgradienten hervorgerufene Raumladungszone modellieren kann.

Das Empfängerausgangssignal S0 wird in einem Verstärker V verstärkt, so dass ein Regelwertsignal S4 gebildet wird. Der Verstärker V ist damit die Verarbeitungseinheit des Sensorsystems 1. Das Regelwertsignal S4 kann ausgegeben und weiter verarbeitet werden, da das Signal S4 ein Maß für die Eigenschaft der Übertragungsstrecke oder für die Eigenschaft des in der Übertragungsstrecke I angeordneten Objekts O ist. Das Signal S4 repräsentiert also den Messwert des Sensorsystems.

Darüber hinaus wird das Regelwertsignal S4, das in seiner Funktion innerhalb des Regelkreises der eines Fourier-Koeffizienten bezogen auf das Sendespeisesignal S5 entspricht, in einer Multiplikationseinheit M mit dem Sendespeisesignal S5 multipliziert und somit quasi zurücktransformiert. Es entsteht ein Vorsignal S6. Die Rücktransformationseinheit RE führt eine Rücktransformation aus und bildet eine Regelschleife, mit der das Vorsignal S6 einem Sender zugeführt wird.

In Figur 1 ist die Rücktransformation als Kompensationsrücktransformation KRT ausgeführt, wobei eine Kompensationseinheit als Kompensationssender K ausgebildet ist. Das Vorsignal S6 kann optional, wie hier dargestellt, mit einem Offset-Signal eines Offset-Senders B1 überlagert werden und wird dann zum Kompensationsspeisesignal S3. Es wird direkt dem Kompensationssender (Kompensator) K zugeführt, der das Kompensatorsignal S31 über eine Übertragungsstrecke I3 direkt an den als Drift-Field-Diode DFD ausgebildeten Empfänger D sendet. Die Signale S4, S3 und S6 können auch als digitale Signale in Form von Bussen ausgeführt sein.

Durch die Regelschleife und die Kompensation über den Kompensationssender K wird das Empfängerausgangssignal S0 bis auf einen Regelfehler bei Änderung der durch den Empfänger D empfangenen physikalischen Größe (Sendesignal S1, z. B. Licht) durch die Regelschleife mittels des Kompensationsspeisesignals S3 zurückgeführt.

Die Sensitivität des Empfängers D, also der Drift-Field-Diode DFD wird über das Sendespeisesignal S5 erzeugt. Die Messung läuft dabei so ab, dass der Sender H mit dem Sendespeisesignal S5 gespeist wird und ein Sendesignal S1 an den Empfänger aussendet, so dass dessen Einstrahlung mittels mindestens einer rückkoppelnden Regelung und Anpassung der Empfängersensitivität über das Senderspeisesignal so kompensiert wird, dass das Empfängerausgangssignal S0 - bis auf einen Regelfehler und das Systemrauschen - ein Gleichsignal ist, bevorzugt Null ist, wenn der Regelkreis eingeschwungen ist.

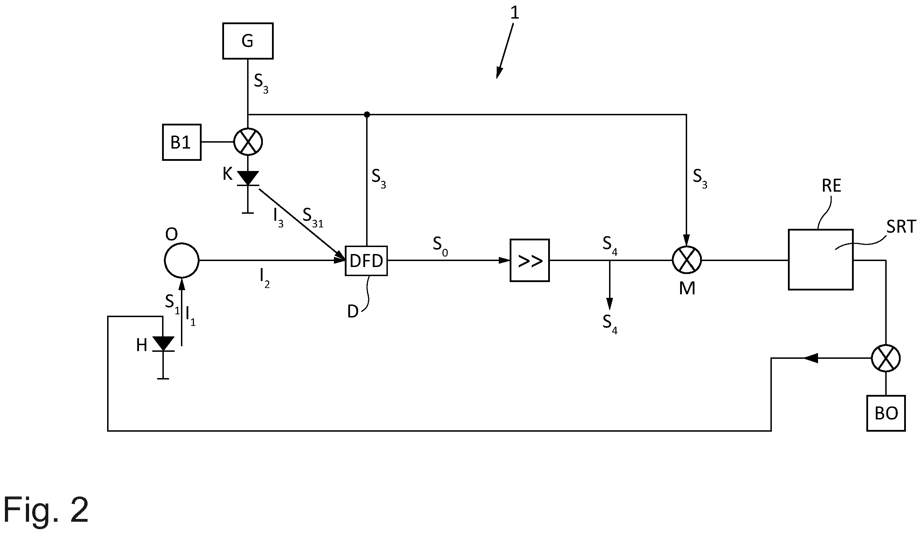

Fig. 2 zeigt eine alternative Ausführungsform des Sensorsystems 1 mit einem Regelkreis, bei dem der Generator G das Kompensationsspeisesignal S3 erzeugt, das summiert mit einem Offset aus einem Offset-Generator B1 den Kompensationssender K speist. Der Kompensationssender K sendet ein Kompensationssignal S31 zu dem als Drift-Field-Diode DFD ausgeführten Empfänger D. Die Drift-Field-Diode DFD wird ebenfalls mit dem Kompensationssendesignal S3 gespeist, so dass deren Sensitivität nun von dem Kompensationsspeisesignal S3 gesteuert werden kann. Die Rückführung erfolgt durch Weiterverarbeitung des Empfängerausgangssignals S0 und Verstärkung, so dass ein Regelwertsignal S4 gebildet wird, das ausgegeben wird und als Maß für ein in der Übertragungsstrecke I positioniertes Objekt O und dessen Eigenschaften ist. Das Regelwertsignal S4 wird dann in der Regelschleife mit dem Kompensationsspeisesignal S3 multipliziert, wobei die Rücktransformationseinheit RE eine Senderücktransformation SRT ausführt und aus dem Regelwertsignal S4 durch ein Aufsummieren eines Offset-Signals, das von einem Offset-Generator B0 erzeugt wird, zu dem Sendespeisesignal S5 verarbeitet. Dieses speist den Sender H, der ein Sendesignal S1 in die Übertragungsstrecke abgibt, das von einem Objekt O in der Übertragungsstrecke I beeinflusst wird und zu der DFD-Diode gelangt. Selbstverständlich können auch mehrere Drift-Field-Dioden eingesetzt werden.

Auch hier findet wieder eine kompensierende Regelung statt, so dass am Empfänger D ein Gleichsignal ausgegeben wird und das Empfängerausgangssignal S0 bis auf einen Regelfehler und das Systemrauschen keine Anteile des Kompensatorspeisesignals S3 enthält.

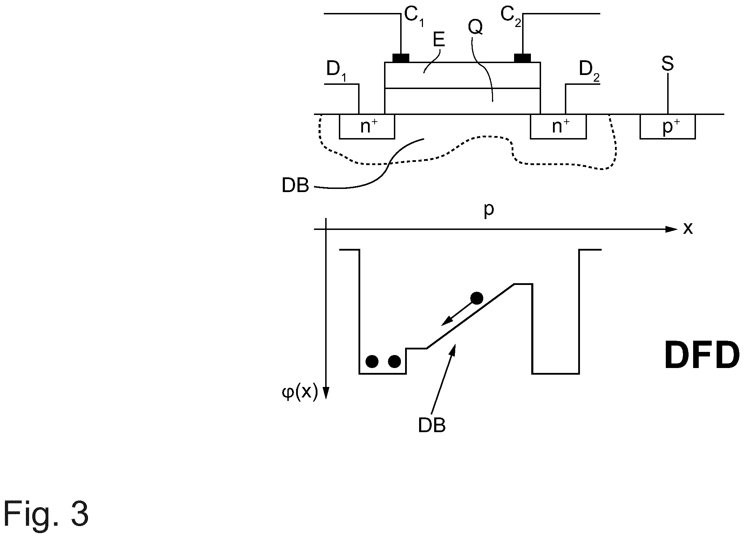

Fig. 3 zeigt einen Prinzipaufbau einer lateralen Drift-Field-Diode, wie sie in dem erfindungsgemäßen Sensorsystem eingesetzt werden kann. Im oberen Teil der Fig. 3 ist ein Querschnitt durch die Drift-Field-Diode gezeigt.

Die Drift-Field-Diode weist zwei hochdotierte Kontaktbereiche eines ersten Leitungstyps auf, die die beiden Kontakte D1 und D2 bilden. Die Kontaktbereiche sind in einem halbleitenden Substrat eines zweites Leitungstyps oder einer Wanne eines zweites Leitungstyps angeordnet und jeweils teilweise umschlossen. Der Wannen- oder Substratanschluss ist mit dem Bezugszeichen S bezeichnet. Zwischen den beiden hochdotierten Kontakten D1, D2 ist ein Bereich einer schwachen Dotierung angeordnet, so dass ein Dotierungsgradient von einem Kontakt D1 zum anderen D2 besteht. Dieser mit einem Dotierungsgradienten behaftete Bereich, wird Drift-Field-Bereich genannt. Er verfügt somit über ein eingebautes elektrisches Drift-Field, das Ladungsträgerpaare innerhalb des Drift-Field-Bereichs DB trennt. Die Ladungsträgerpaare können beispielsweise durch Lichtteilchen (Photonen) erzeugt werden. Die getrennten Ladungsträgerpaare werden dann den Kontaktbereichen D1, D2 zugeführt.

In dem gezeigten Beispiel ist oberhalb des Drift-Field-Bereichs und isoliert von diesem eine flächenhafte Elektrode angeordnet, mit der das Drift-Field im Drift-Field-Bereich wie bei einem MOS-Transistor gesteuert werden kann. Die Elektrode E ist vorzugsweise für die zu messende Strahlung möglichst transparent ausgeführt, z. B. aus ITO (Indium-Zinn-Oxyd). Dies kann beispielsweise auch durch ein hinreichend dünnes Elektronenmaterial erreicht werden, das dann nur eine geringe Dämpfung hat für das zu empfangene Signal, beispielsweise Licht. Zwischen der Elektrode E und dem Drift-Field-Bereich DB wird typischerweise ein Gate-Oxyd verwendet.

Im unteren Bereich der Fig. 3 ist der oben beschriebene Effekt zu erkennen, wenn die Ladungsträger innerhalb des Drift-Field-Bereichs DB und somit innerhalb des Bereichs, in dem ein Dotierungsgradient besteht, wandern. Durch Änderung der Spannung am Substratanschluss kann die Raumladungszone zwischen dem ersten und dem zweiten Kontakt D1, D2 verändert und somit das Drift-Field variiert werden.

## Patentansprüche

1. Sensorsystem zur Ermittlung der Eigenschaften einer Übertragungsstrecke zwischen einem Sender und einem Empfänger oder zur Ermittlung eines Objektes in der Übertragungsstrecke, wobei das Sensorsystem auf einer rückkoppelnden Regelung basiert,
umfassend
- den Sender (H), der mit einem Sendespeisesignal (S5) angesteuert wird und ein Sendesignal (S1) in die Übertragungsstrecke (I) sendet,
- den Empfänger (D), der das vom Sender (H) ausgesandte Sendesignal (S1) nach Durchgang durch die Übertragungsstrecke (I) oder nach Durchgang durch die Übertragungstrecke (I) und Beeinflussung durch das Objekt (O) in der Übertragungsstrecke (I) empfängt und ein Empfängerausgangssignal (S0) ausgibt,
- eine Kompensationseinheit, die mit einem Kompensationsspeisesignal (S3) gespeist wird und ein Kompensationssignal (S31) erzeugt, das dem Empfängerausgangssignal überlagert ist,
- eine Verarbeitungseinheit, um das Empfängerausgangssignal (S0) weiter zu verarbeiten und ein Regelwertsignal (S4) zu erzeugen,
- eine Signalerzeugungseinheit (G), die das Sendespeisesignal (S5) oder das Kompensationsspeisesignal (S3) erzeugt,
- eine Rücktransformationseinheit (RE), die mit dem Regelwertsignal (S4) oder einem weiterverarbeiteten Regelwertsignal eine Rücktransformation durchführt, wobei
- die Rücktransformation eine Sende-Rücktransformation (SRT) ist und das Sendespeisesignal (S5) erzeugt, wenn in der Signalerzeugungseinheit (G) das Kompensationsspeisesignal (S3) erzeugt wird, oder
- die Rücktransformation eine Kompensation-Rücktransformation (KRT) ist und das Kompensationsspeisesignal (S3) erzeugt, das der Kompensationseinheit zugeführt wird, wenn die Signalerzeugungseinheit (G) das Sendespeisesignal (S5) erzeugt,
wobei
- das Regelwertsignal (S4) ein Maß für eine Eigenschaft der Übertragungsstrecke (I) und/oder des Objekts (O) in der Übertragungsstrecke (I) ist,
- **dadurch gekennzeichnet, dass**
der Empfänger (D) eine Drift-Field-Diode (DFD) ist, in der ein Element der Verarbeitungseinheit integriert ist,
- die Drift-Field-Diode (DFD) einen durch ein Dotierungsprofil erzeugten Dotierungsgradienten aufweist, so dass eine Raumladungszone entsteht, die durch ein elektrostatisches Feld moduliert werden kann,
- die Modulation der Raumladungszone der Drift-Field-Diode (DFD) mittels des Sendespeisesignals (S5), wenn die Signalerzeugungseinheit (G) das Sendespeisesignal (S5) erzeugt, oder des Kompensationsspeisesignals (S3), wenn in der Signalerzeugungseinheit (G) das Kompensationsspeisesignal (S3) erzeugt wird, erfolgt und die Empfindlichkeit der Drift-Field-Diode (DFD) gesteuert werden kann mittels der Modulation; und
- das in der Drift-Field-Diode (DFD) integrierte Element der Verarbeitungseinheit eine Linearform ist und die Linearform der Verarbeitungseinheit eine Multiplikationseinheit ist.

2. Sensorsystem nach einem der vorherigen Ansprüche, **dadurch gekennzeichnet, dass** die Frequenz des Sendesignals des Senders (H) mindestens 100 MHz, bevorzugt mindestens 200 MHz, besonders bevorzugt mindestens 500 MHz beträgt.

3. Sensorsystem nach einem der vorherigen Ansprüche, **dadurch gekennzeichnet, dass** die Signalerzeugungseinheit (G) ein Wavelet-Generator ist, der ein Paar von Wavelets erzeugt, die zu dem Sendesignal (S1) weiterverarbeitet werden.

4. Sensorsystem nach dem vorherigen Anspruch, **dadurch gekennzeichnet, dass** das Paar der vom Wavelet-Generator erzeugten Wavelets aus einer Sinus-Funktion und einer dazu orthogonalen Cosinus-Funktion besteht.

5. Sensorsystem nach einem der beiden vorhergehenden Ansprüche, **dadurch gekennzeichnet, dass** das Speisesignal (S5) durch gewichtete oder ungewichtete Summierung aus den Wavelet-Signalen gebildet wird.

6. Sensorsystem nach einem der vorherigen Ansprüche, **dadurch gekennzeichnet, dass** ein Filter das Regelwertsignal (S4) zu einem FilterAusgangssignal umwandelt, das weiterverarbeitet und der Kompensationseinheit zugeführt wird.

7. Sensorsystem nach einem der vorherigen Ansprüche, **dadurch gekennzeichnet, dass** bei Rückführung des Kompensationsspeisesignals (S3)
- das Kompensationsspeisesignal (S3) mit einer ersten Kompensationsfitterfunktion verstärkt und/oder gefiltert wird und als erstes Kompensatorsignal über einen Kompensationssender (K) und eine zwischen dem Kompensationssender (K) und dem Empfänger (D) bestehende Übertragungsstrecke (I3) summierend oder multiplizierend überlagernd zum Empfänger (D) gelangt, und /oder
- das Kompensationsspeisesignal (S3) mit einer zweiten Kompensationsfilterfunktion verstärkt und/oder gefiltert wird und als zweites Kompensatorsignal summierend oder multiplizierend überlagernd direkt in den Empfänger (D) hinein geleitet wird, und/oder
- das Kompensationsspeisesignal (S3) mit einer dritten Kompensationsfilterfunktion verstärkt und/oder gefiltert wird und als drittes Kompensatorsignal summierend in einem Addierer mit dem Empfängerausgangssignal (S0) verarbeitet und der Verarbeitungseinheit zugeführt wird.

8. Sensorsystem nach einem der Ansprüche 1 bis 7, **dadurch gekennzeichnet, dass** die Kompensationseinheit ein Kompensationssender (K) ist, der mit dem Kompensationsspeisesignal (S3) gespeist wird und ein Kompensationssignal (S31) zu dem Empfänger (D) sendet.

9. Sensorsystem nach einem der vorherigen Ansprüche, **dadurch gekennzeichnet, dass** das rückgeführte Speisesignal (S3, S5) mit einem Offset beaufschlagt wird, bevorzugt durch Addition eines Offsetsignals ,eines Offsetgenerators (B0, B1).

## Claims

1. Sensor system for determining the properties of a transmission path between a transmitter and a receiver or for determining an object in the transmission path, wherein the sensor system is based on a feedback control,
comprising
- the transmitter (H), which is triggered with a transmission feed signal (S5) and transmits a transmission signal (S1) into the transmission path (I),
- the receiver (D), which receives the transmission signal (S1) transmitted by the transmitter (H) after passing through the transmission path (I) or after passing through the transmission path (I) and being influenced by the object (O) in the transmission path (I), and outputs a receiver output signal (S0),
- a compensation unit, which is fed with a compensation feed signal (S3) and generates a compensation signal (S31) superimposing the receiver output signal,
- a processing unit for further processing the receiver output signal (S0) and for generating a control value signal (S4),
- a signal generation unit (G), which generates the transmission feed signal (S5) or the compensation feed signal (S3),
- a reverse transformation unit (RE), which performs a reverse transformation with the control value signal (S4) or with a further processed control value signal, wherein
- the reverse transformation is a transmission reverse transformation (SRT) and generates the transmission feed signal (S5) when the compensation feed signal (S3) is generated in the signal generation unit (G), or
- the reverse transformation is a compensation reverse transformation (KRT) and generates the compensation feed signal (S3), which is fed into the compensation unit when the signal generation unit (G) generates the transmission feed signal (S5),
wherein
- the control value signal (S4) is a measure for a property of the transmission path (I) and/or the object (O) in the transmission path (I),
**characterized in that**
- the receiver (D) is a drift field diode (DFD) into which an element of the processing unit is integrated,
- the drift field diode (DFD) comprises a doping gradient generated by a doping profile so that a space-charge region is generated which can be modulated by an electrostatic field,
- the modulation of the space-charge region of the drift field diode (DFD) is carried out by the transmission feed signal (S5) if the signal generation unit (G) generates the transmission feed signal (S5), or by the compensation feed signal (S3) if the compensation feed signal (S3) is generated in the signal generation unit (G), and **in that** the sensitivity of the drift field diode (DFD) can be controlled via the modulation; and
- the element of the processing unit integrated into the drift field diode (DFD) is a linear form and the linear form of the processing unit is a multiplication unit.

2. Sensor system according to any one of the preceding claims, **characterized in that** the frequency of the transmission signal of the transmitter (H) is at least 100 MHz, preferably at least 200 MHz, particularly preferably at least 500 MHz.

3. Sensor system according to any one of the preceding claims, **characterized in that** the signal generation unit (G) is a wavelet generator which generates a pair of wavelets that are further processed into the transmission signal (S1).

4. Sensor system according to the preceding claim, **characterized in that** the pair of wavelets generated by the wavelet generator consists of a sine function and a cosine function orthogonal thereto.

5. Sensor system according to any one of the two preceding claims, **characterized in that** the feed signal (S5) is generated by weighted or unweighted summation of the wavelet signals.

6. Sensor system according to any one of the preceding claims, **characterized in that** a filter converts the control value signal (S4) into a filter output signal, which is further processed and fed into the compensation unit.

7. Sensor system according to any one of the preceding claims, **characterized in that** when feeding back the compensation feed signal (S3)
- the compensation feed signal (S3) is amplified and/or filtered with a first compensation filtering function and reaches the receiver (D) via a compensation transmitter (K) and a transmission path (I3) existing between the compensation transmitter (K) and the receiver (D) as first compensator signal being additively or multiplicatively superimposing, and /or
- the compensation feed signal (S3) is amplified and/or filtered with a second compensation filtering function and forwarded directly into the receiver (D) as second compensator signal being additively or multiplicatively superimposing, and/or
- the compensation feed signal (S3) is amplified and/or filtered with a third compensation filtering function and forwarded to the processing unit as third compensator signal additively processed with the receiver output signal (S0) in an adder.

8. Sensor system according to one of the claims 1 to 7, **characterized in that** the compensation unit is a compensation transmitter (K), which is fed with the compensation feed signal (S3) and transmits a compensation signal (S31) to the receiver (D).

9. Sensor system according to any one of the preceding claims, **characterized in that** the fed-back feed signal (S3, S5) is appended with an offset, preferably by adding an offset signal of an offset generator (B0, B1).

## Revendications

1. Système de capteur pour la détermination des propriétés d'une voie de transmission entre un émetteur et un récepteur ou pour la détermination d'un objet dans la voie de transmission, le système de capteur étant basé sur une régulation rétroactive,
comportant
- l'émetteur (H) qui est commandé par un signal d'alimentation d'émission (S5) et émet un signal d'émission (S1) dans la voie de transmission (I),
- le récepteur (D) qui reçoit le signal d'émission (S1) émis par l'émetteur (H) après passage par la voie de transmission (I) ou après passage par la voie de transmission (I) et interférence de l'objet (O) dans la voie de transmission (I) et délivre un signal de sortie de récepteur (S0),
- une unité de compensation qui est alimentée par un signal d'alimentation de compensation (S3) et produit un signal de compensation (S31), lequel est superposé au signal de sortie de récepteur,
- une unité de traitement afin de traiter ultérieurement le signal de sortie de récepteur (S0) et de produire un signal de valeur de régulation (S4),
- une unité de production de signal (G) qui produit le signal d'alimentation d'émission (S5) ou le signal d'alimentation de compensation (S3),
- une unité de transformation inverse (RE) qui effectue une transformation inverse avec le signal de valeur de régulation (S4) ou un signal de valeur de régulation traité ultérieurement, dans lequel
- la transformation inverse est une transformation inverse d'émission (SRT) et produit le signal d'alimentation d'émission (S5) lorsque le signal d'alimentation de compensation (S3) est produit dans l'unité de production de signal (G), ou
- la transformation inverse est une transformation inverse de compensation (KRT) et produit le signal d'alimentation de compensation (S3), lequel est introduit dans l'unité de compensation lorsque l'unité de production de signal (G) produit le signal d'alimentation d'émission (S5),
dans lequel
- le signal de valeur de régulation (S4) est une mesure pour une propriété de la voie de transmission (I) et/ou de l'objet (O) dans la voie de transmission (I),
- **caractérisé en ce que**
le récepteur (D) est une diode drift-field (DFD) dans laquelle un élément de l'unité de traitement est intégré,
- la diode drift-field (DFD) comprend un gradient de dopage produit par un profil de dopage de telle sorte qu'il en résulte une zone de charge d'espace qui peut être modulée par un champ électrostatique,
- la modulation de la zone de charge d'espace de la diode drift-field (DFD) s'effectue au moyen du signal d'alimentation d'émission (S5) lorsque l'unité de production de signal (G) produit le signal d'alimentation d'émission (S5), ou du signal d'alimentation de compensation (S3) lorsque le signal d'alimentation de compensation (S3) est produit dans l'unité de production de signal (G), et la sensibilité de la diode drift-field (DFD) peut être commandée au moyen de la modulation ; et
- l'élément intégré dans la diode drift-field (DFD) de l'unité de traitement est une forme linéaire et la forme linéaire de l'unité de traitement est une unité de multiplication.

2. Système de capteur selon l'une des revendications précédentes, **caractérisé en ce que** la fréquence du signal d'émission de l'émetteur (H) s'élève à au moins 100 MHz, de préférence à au moins 200 MHz, de manière particulièrement préférée à au moins 500 MHz.

3. Système de capteur selon l'une des revendications précédentes, **caractérisé en ce que** l'unité de production de signal (G) est un générateur d'ondelettes qui produit une paire d'ondelettes, lesquelles sont traitées ultérieurement en le signal d'émission (S1).

4. Système de capteur selon la revendication précédente, **caractérisé en ce que** la paire d'ondelettes produites par le générateur d'ondelettes est constituée d'une fonction sinus et d'une fonction cosinus orthogonale à celle-ci.

5. Système de capteur selon l'une des deux revendications précédentes, **caractérisé en ce que** le signal d'alimentation (S5) est formé par sommation pondérée ou non pondérée à partir des signaux d'ondelettes.

6. Système de capteur selon l'une des revendications précédentes, **caractérisé en ce qu'**un filtre convertit le signal de valeur de régulation (S4) en un signal de sortie de filtre qui est traité ultérieurement et introduit dans l'unité de compensation.

7. Système de capteur selon l'une des revendications précédentes, **caractérisé en ce que**, lors de la recirculation du signal d'alimentation de compensation (S3),
- le signal d'alimentation de compensation (S3) est renforcé et/ou filtré avec une première fonction de filtre de compensation et arrive au récepteur (D) sous forme superposée par sommation ou multiplication sous la forme d'un premier signal de compensateur par l'intermédiaire d'un émetteur de compensation (K) et d'une voie de transmission (I3) constituée entre l'émetteur de compensation (K) et le récepteur (D), et/ou
- le signal d'alimentation de compensation (S3) est renforcé et/ou filtré avec une deuxième fonction de filtre de compensation et est dirigé directement dans le récepteur (D) sous forme superposée par sommation ou multiplication sous la forme d'un deuxième signal de compensateur, et/ou
- le signal d'alimentation de compensation (S3) est renforcé et/ou filtré avec une troisième fonction de filtre de compensation et est traité avec le signal de sortie de récepteur (S0) par sommation dans un additionneur sous la forme d'un troisième signal de compensateur et introduit dans l'unité de traitement.

8. Système de capteur selon l'une des revendications 1 à 7, **caractérisé en ce que** l'unité de compensation est un émetteur de compensation (K) qui est alimenté par le signal d'alimentation de compensation (S3) et émet un signal de compensation (S31) vers le récepteur (D).

9. Système de capteur selon l'une des revendications précédentes, **caractérisé en ce que** le signal d'alimentation (S3, S5) en recirculation est soumis à un décalage, de préférence par addition d'un signal de décalage d'un générateur de décalage (B0, B1).
